# EUROPEAN PATENT APPLICATION

(11) **EP 2 040 363 A1**
(43) Date of publication of application: **25.03.2009**
(21) Application number: 07768266.4
(22) Date of filing: 29.06.2007
(51) Int. Cl.: H02M 3/155, B60L 11/18

(54) **POWER SUPPLY SYSTEM AND VEHICLE HAVING THE SAME**

(30) Priority: 06.07.2006 JP 2006186583
(71) Applicant: Toyota Jidosha Kabushiki Kaisha, Toyota-shi, Aichi 471-8571 (JP)
(72) Inventor: ICHIKAWA, Shinji, Toyota-shi Aichi 471-8571 (JP); ISHIKAWA, Tetsuhiro, Toyota-shi Aichi 471-8571 (JP)
(74) Representative: TBK-Patent
(86) International application number: PCT/JP2007/063534
(87) International publication number: WO 2008/004647

(57) **Abstract**

As magnetization unsaturation is maintained until an inductor current #Is with which a core (CR1) is magnetically saturated is reached, an inductor (L1) maintains an inductance value Z1. When the inductor current increases above #Is, the inductance value of the inductor (L1) decreases. On the other hand, as magnetization unsaturation is maintained until an inductor current Is is reached, an inductor (L2) maintains an inductance value Z2. Converters including the inductor (L1) and the inductor (L2) respectively supply each share of electric power to a load device, so that loss involved with a voltage conversion operation is reduced and transient stability is maintained.

## Description

### Technical Field

The present invention relates to a power supply system having a plurality of power storage units and a vehicle including the power supply system, and more particularly to a technique for attaining both high efficiency and transient stability.

### Background Art

Recently, considering environmental issues, attention has been paid to a vehicle employing a motor as a drive force source, such as an electric vehicle, a hybrid vehicle and a fuel cell vehicle. Such a vehicle includes a power storage unit implemented, for example, by a secondary battery or a capacitor for supplying electric power to the motor, and converting kinetic energy to electric energy during regenerative braking and storing such electric power.

In such a vehicle employing the motor as the drive force source, in order to enhance acceleration performance and running performance such as travel distance, greater charge/discharge capacity of the power storage unit is desired. Here, a configuration where a plurality of power storage units are mounted has been proposed as a method of increasing the charge/discharge capacity of the power storage unit.

For example, U. S. Patent No. 6,608,396 discloses a power control system providing desired high DC voltage levels required by a high voltage vehicle traction system. The power control system includes a plurality of power stages for providing DC power to at least one inverter, each stage including a battery and boost/buck DC-DC converter, the power stages wired in parallel, and a controller controlling the plurality of power stages so as to maintain a voltage output to at least one inverter by causing uniform charge/discharge of the batteries of the plurality of power stages.

On the other hand, in including a plurality of power storage units, voltage conversion units (corresponding to the boost/buck DC-DC converter above) in the number equal to the number of power storage units are required correspondingly. As loss involved with a voltage conversion operation is caused in such voltage conversion units, such loss is desirably minimized.

Japanese Patent Laying-Open No. 09-219968 discloses a boost-type power supply apparatus capable of lowering power consumption when load is light, as a method of reducing loss involved with the voltage conversion operation. The boost-type power supply apparatus includes means for switching between inductors so that a large inductance value is attained when a load is light and a small inductance value is attained when a load is heavy.

In general, an inductor as mounted on a vehicle is constituted of a core (magnetic core) made of layered silicon steel sheets and a coil wound around the core, and hence volume and weight thereof is relatively large. Accordingly, it is not preferred in terms of arrangement space and weight on board to arrange at least two inductors that are switched depending on a load, for each of a plurality of voltage conversion units in a vehicle including a plurality of power storage units as disclosed in U. S. Patent No. 6,608,396. In addition, even though loss involved with the voltage conversion operation can be reduced, increase in the weight on board may counteract such effects.

On the other hand, an inductor of high efficiency may be used for reducing loss involved with the voltage conversion operation. Such an inductor of high efficiency, however, is designed to reduce hysteresis loss caused in a core, and therefore, even though a current that flows through the inductor is relatively low, the core may be magnetically saturated. Such magnetization saturation results in fluctuation of an inductance value of the inductor, which in turn may lead to another problem of lower transient stability.

### Disclosure of the Invention

The present invention was made to solve such problems, and an object of the present invention is to provide a power supply system including a plurality of power storage units attaining both high efficiency and transient stability, and a vehicle including the same.

According to one aspect of the present invention, the present invention is directed to a power supply system having a plurality of power storage units each configured to be capable of charge and discharge. The power supply system includes a power line configured to be capable of supplying and receiving electric power between a load device and the power supply system, and a plurality of voltage conversion units provided between respective ones of the plurality of power storage units and the power line and performing a voltage conversion operation between the corresponding power storage unit and the power line. Each of the plurality of voltage conversion units includes an inductor and a switching circuit configured to be able to control a current that flows from the corresponding power storage unit to the inductor and implementing the voltage conversion operation by repeating storage/discharge of electric power in/from the inductor, and the plurality of voltage conversion units are constituted of a first-group voltage conversion unit including at least one voltage conversion unit and a second-group voltage conversion unit including at least one voltage conversion unit. In addition, each of the inductors included in the first-group and second-group voltage conversion units includes a core magnetized in accordance with storage/discharge of electric power, each core included in the first-group voltage conversion unit can be in any of magnetization unsaturation and magnetization saturation within a range of a current that flows through the inductor, and each core included in the second-group voltage conversion unit is capable of maintaining magnetization unsaturation within a range of a current that flows through the inductor. The first-group and the second-group voltage conversion units supply each share of electric power to the load device.

According to one aspect of the present invention, each core included in the first-group voltage conversion unit can be in any of magnetization unsaturation and magnetization saturation within a range of a current that flows through the inductor. On the other hand, each core included in the second-group voltage conversion unit is capable of maintaining magnetization unsaturation within a range of a current that flows through the inductor.

Accordingly, in each first-group voltage conversion unit, as a current that may magnetically saturate the core of the inductor is tolerable, an inductor of high efficiency, causing magnetization saturation with small current-induced magnetic field, can be employed. Thus, loss involved with the voltage conversion operation in each first-group voltage conversion unit can be reduced. Furthermore, as the core of the inductor maintains magnetization unsaturation in each second-group voltage conversion unit, the inductance value of the inductor is stable. Thus, transient stability in the voltage conversion operation in each second-group voltage conversion unit can be maintained. Therefore, lowering in transient stability can be suppressed while achieving reduced loss involved with the voltage conversion operation in the voltage conversion unit.

According to another aspect of the present invention, the present invention is directed to a power supply system having a plurality of power storage units each configured to be capable of charge and discharge. The power supply system includes a power line configured to be capable of supplying and receiving electric power between a load device and the power supply system, and a plurality of voltage conversion units provided between respective ones of the plurality of power storage units and the power line and performing a voltage conversion operation between the corresponding power storage unit and the power line. Each of the plurality of voltage conversion units includes an inductor and a switching circuit configured to be able to control a current that flows from the corresponding power storage unit to the inductor and implementing the voltage conversion operation by repeating storage/discharge of electric power in/from the inductor. The plurality of voltage conversion units are constituted of a first-group voltage conversion unit including at least one voltage conversion unit and a second-group voltage conversion unit including at least one voltage conversion unit, each of the inductors included in the first-group and second-group voltage conversion units includes a core magnetized in accordance with storage/discharge of electric power, and each core included in the first-group voltage conversion unit is lower in hysteresis loss per a unit volume than the core included in the second-group voltage conversion unit. The first-group and the second-group voltage conversion units supply each share of electric power to the load device.

According to another aspect of the present invention, each core included in the first-group voltage conversion unit is lower in hysteresis loss per a unit volume than the core included in the second-group voltage conversion unit. Accordingly, each first-group voltage conversion unit can achieve reduced loss involved with the voltage conversion operation. Furthermore, as each second-group voltage conversion unit is greater in hysteresis loss per a unit volume than the core included in the first-group voltage conversion unit, it is less likely that the core is magnetically saturated. Thus, transient stability in the voltage conversion operation in each second-group voltage conversion unit can be maintained. Therefore, lowering in transient stability can be suppressed while achieving reduced loss involved with the voltage conversion operation in the voltage conversion unit.

Preferably, the power supply system further includes an electric power allotment decision unit for allotting a steady component of an electric power request from the load device to the first-group voltage conversion unit and allotting a fluctuating component of the electric power request to the second-group voltage conversion unit.

More preferably, the electric power allotment decision unit includes a steady component extraction unit extracting the steady component from the electric power request, a fluctuating component extraction unit extracting the fluctuating component from the electric power request, a first control signal generation unit generating a control signal for controlling each switching circuit in the first-group voltage conversion unit in accordance with the steady component extracted by the steady component extraction unit, and a second control signal generation unit generating a control signal for controlling each switching circuit in the second-group voltage conversion unit in accordance with the fluctuating component extracted by the fluctuating component extraction unit.

More preferably, the electric power allotment decision unit further includes a fluctuating component determination unit determining magnitude of the fluctuating component extracted by the fluctuating component extraction unit, and when the fluctuating component determination unit determines that the magnitude of the fluctuating component is equal to or smaller than a prescribed threshold value, the first control signal generation unit generates a control signal for allotting the entire electric power request to the first-group voltage conversion unit and the second control signal generation unit generates a control signal for stopping the voltage conversion operation in each second-group voltage conversion unit.

In addition, preferably, each of the first-group and second-group voltage conversion units includes a chopper circuit configured to include the inductor.

According to yet another aspect of the present invention, the present invention is directed to a vehicle including the power supply system described above and a drive force generation unit generating drive force by receiving electric power supplied from the power supply system.

According to the present invention, high efficiency and transient stability can both be attained.

### Brief Description of the Drawings

Fig. 1 is a schematic configuration diagram showing a substantial part of a vehicle including a power supply system according to an embodiment of the present invention.
Fig. 2 is a schematic configuration diagram of a converter shown in Fig. 1.
Fig. 3 illustrates an exemplary magnetization characteristic of a core.
Fig. 4 shows a DC bias characteristic of an inductor according to the embodiment of the present invention.
Figs. 5A and 5B illustrate overall electric power allotment to converters.
Fig. 6 is a block diagram showing a control structure in a control unit.
Fig. 7 is a flowchart showing a processing procedure in the control unit.
Fig. 8 is a schematic configuration diagram showing a substantial part of a vehicle including a power supply system according to a variation of the embodiment of the present invention.

### Best Modes for Carrying Out the Invention

An embodiment of the present invention will be described in detail with reference to the drawings. The same or corresponding elements in the drawings have the same reference characters allotted, and therefore detailed description thereof will not be repeated.

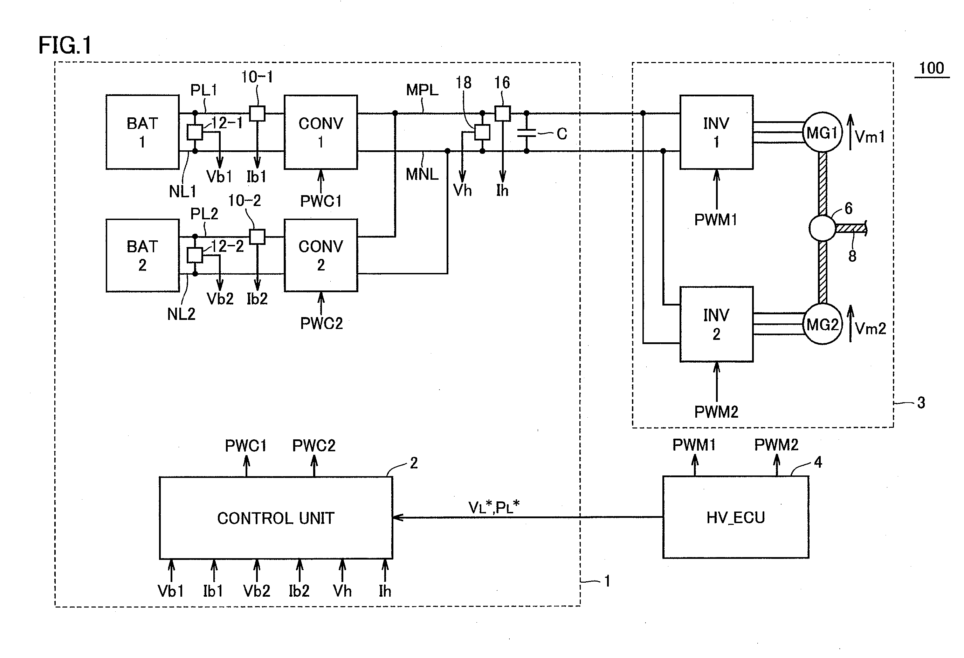

A configuration of a vehicle 100 including a power supply system 1 according to an embodiment of the present invention will be described with reference to Fig. 1. In the present embodiment, a configuration for supplying and receiving electric power between a drive force generation unit 3 for generating drive force of vehicle 100 and power supply system 1 is illustrated as an example of a load device. Here, vehicle 100 runs by transmitting to wheels (not shown), drive force generated by drive force generation unit 3 by receiving the electric power supplied from power supply system 1.

In the present embodiment, power supply system 1 including two power storage units will be described. Power supply system 1 supplies/receives DC power to/from drive force generation unit 3 through a main positive bus MPL and a main negative bus MNL.

Drive force generation unit 3 includes a first inverter INV1, a second inverter INV2, a first motor-generator MG1, and a second motor-generator MG2, and generates drive force in accordance with switching instructions PWM1, PWM2 from an HV_ECU (Hybrid Vehicle Electronic Control Unit) 4.

Inverters INV1, INV2 are connected in parallel to main positive bus MPL and main negative bus MNL, and supply/receive electric power to/from power supply system 1. That is, inverters INV1, INV2 convert DC power received through main positive bus MPL and main negative bus MNL to AC power and supply the AC power to motor-generators MG1, MG2 respectively. In addition, inverters INV1, INV2 may be configured to convert AC power generated by motor-generators MG1, MG2 by receiving kinetic energy of vehicle 100 to DC power and return the resultant DC power as the regenerative power to power supply system 1 in regenerative braking or the like of vehicle 100. For example, inverters INV1, INV2 are constituted of a bridge circuit including switching elements of three phases, and generate three-phase AC power by performing a switching (circuit opening/closing) operation in response to switching instructions PWM1, PWM2 received from HV_ECU 4.

Motor-generators MG1, MG2 are configured to be able to generate rotational drive force by receiving AC power supplied from inverters INV1, INV2 respectively and to be able to generate AC power by receiving external rotational drive force. For example, motor-generators MG1, MG2 are implemented by a three-phase AC electric rotating machine including a rotor having permanent magnets embedded. Motor-generators MG1, MG2 are coupled to a power split device 6, so as to transmit the generated drive force to wheels (not shown) via a drive shaft 8.

If drive force generation unit 3 is applied to a hybrid vehicle, motor-generators MG1, MG2 are also mechanically coupled to an engine (not shown) through power split device 6 or drive shaft 8. Then, HV_ECU 4 carries out control such that an optimal ratio between the drive force generated by the engine and the drive force generated by motor-generators MG1, MG2 is attained. If drive force generation unit 3 is applied to such a hybrid vehicle, one motor-generator may serve solely as the motor, while another motor-generator may serve solely as the generator.

HV_ECU 4 executes a program stored in advance, so as to calculate torque target values and speed target values of motor-generators MG1, MG2, based on a signal transmitted from each not-shown sensor, a running state, variation in an accelerator position, a stored map, or the like. Then, HV_ECU 4 generates switching instructions PWM1, PWM2 and provides the same to drive force generation unit 3 such that generated torque and speed of motor-generators MG1, MG2 attain the calculated torque target values and the speed target values respectively.

In addition, HV_ECU 4 obtains counterelectromotive forces Vm1, Vm2 generated in respective motor-generators MG1, MG2 based on the calculated torque target values and the speed target values or on an actual torque value and an actual speed value detected by not-shown various sensors, and outputs a voltage request V_{L}^{*} decided based on counterelectromotive forces Vm1, Vm2 to power supply system 1. Namely, HV_ECU 4 decides a voltage greater than counterelectromotive force Vm1, Vm2 as voltage request V_{L}^{*} so that electric power can be supplied from power supply system 1 to motor-generator MG1, MG2.

Moreover, HV_ECU 4 calculates an electric power request P_{L}^{*} based on the product of the torque target value and the speed target value or on the product of the actual torque value and the actual speed value described above and outputs the electric power request to power supply system 1. It is noted here that, by changing the sign of electric power request P_{L}^{*}, HV_ECU 4 notifies power supply system 1 of a supply/demand state of electric power in drive force generation unit 3, such as power consumption (positive value) or power regeneration (negative value).

Meanwhile, power supply system 1 includes a smoothing capacitor C, a supply current detection unit 16, a supply voltage detection unit 18, a first converter CONV1, a second converter CONV2, a first power storage unit BAT1, a second power storage unit BAT2, output current detection units 10-1, 10-2, output voltage detection units 12-1, 12-2, and a control unit 2.

Smoothing capacitor C is connected between main positive bus MPL and main negative bus MNL, and reduces AC component contained in electric power supplied from converter CONV1, CONV2.

Supply current detection unit 16 is inserted in main positive bus MPL in series, detects a supply current Ih from power supply system 1 to drive force generation unit 3, and outputs the result of detection to control unit 2.

Supply voltage detection unit 18 is connected between main positive bus MPL and main negative bus MNL, detects a supply voltage Vh from power supply system 1 to drive force generation unit 3, and outputs the result of detection to control unit 2.

Power storage units BAT1, BAT2 are connected in parallel to main positive bus MPL and main negative bus MNL with converters CONV1, CONV2 being interposed respectively. For example, power storage unit BAT1, BAT2 is implemented by a secondary battery configured to be capable of charge/discharge, such as a nickel metal hydride battery or a lithium-ion battery, or by a power storage element such as an electric double layer capacitor.

Converters CONV1, CONV2 are connected to main positive bus MPL and main negative bus MNL in parallel, and perform a voltage conversion operation between respective corresponding power storage units BAT1, BAT2 and main positive bus MPL, main negative bus MNL. More specifically, converters CONV1, CONV2 can boost discharge currents from power storage units BAT1, BAT2 to a target voltage and generate supply electric power. Further detailed configurations of converters CONV1, CONV2 will be described later.

Output current detection units 10-1, 10-2 are inserted in one line of a pair of power lines connecting power storage units BAT1, BAT2 to converters CONV1, CONV2 respectively, detect output currents Ib1, Ib2 involved with input and output of power storage units BAT1, BAT2 respectively, and output the result of detection to control unit 2.

Output voltage detection units 12-1, 12-2 are connected between a pair of power lines connecting power storage units BAT1, BAT2 to converters CONV1, CONV2 respectively, detect output voltages Vb1, Vb2 of power storage units BAT1, BAT2 respectively, and output the result of detection to control unit 2.

Control unit 2 generates switching instructions PWC1, PWC2 in accordance with a control structure which will be described later, based on voltage request V_{L}^{*} and electric power request P_{L}^{*} received from HV_ECU 4, supply current Ih received from supply current detection unit 16, supply voltage Vh received from supply voltage detection unit 18, output current Ib1, Ib2 received from output current detection unit 10-1, 10-2, and output voltage Vb1, Vb2 received from output voltage detection unit 12-1, 12-2, and controls the voltage conversion operation of converter CONV1, CONV2. In particular, control unit 2 allots to converter CONV1 a steady component of electric power request P_{L}^{*} from drive force generation unit 3 and allots to converter CONV2 a fluctuating component of electric power request P_{L}^{*}.

In the embodiment of the present invention, drive force generation unit 3 corresponds to the "load device", main positive bus MPL and main negative bus MNL correspond to the "power line", converter CONV1 corresponds to the "first-group voltage conversion unit," and CONV2 corresponds to the "second-group voltage conversion unit." In addition, control unit 2 implements the "electric power allotment decision unit."

### (Configuration of Converter)

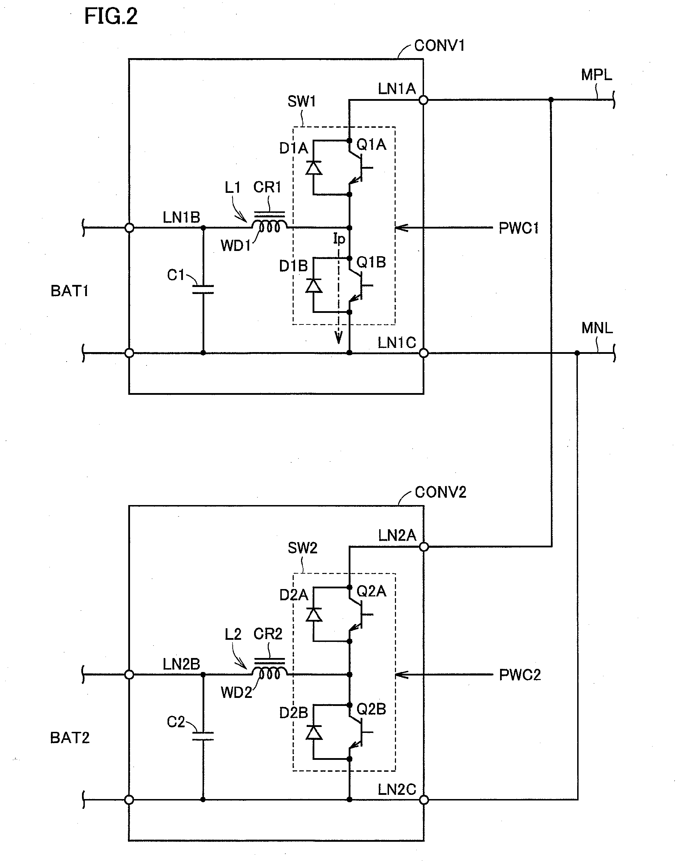

Referring to Fig. 2, converter CONV1 is a boost/buck-type chopper circuit, and includes an inductor L1, a switching circuit SW1, a smoothing capacitor C1, a positive bus LN1A, a negative bus LN1C, and a line LN1B. In addition, switching circuit SW1 includes transistors Q1A, Q1B representing a switching element and diodes D1A, D1B.

Positive bus LN1A has one end connected to main positive bus MPL. In addition, negative bus LN1C has one end connected to a negative side of power storage unit BAT1 and the other end connected to main negative bus MNL. Transistors Q1A, Q1B are connected in series between positive bus LN1A and negative bus LN1C. Transistor Q1A has a collector connected to positive bus LN1A and transistor Q1B has an emitter connected to negative bus LN1C. In addition, diodes D1A, D1B allowing current flow from the emitter side to the collector side are connected between the collectors and the emitters of transistors Q1A, Q1B respectively.

Further, inductor L1 has one end connected to a connection point of transistor Q1A and transistor Q1B and the other end connected to line LN1B. Line LN1B electrically connects inductor L1 and the positive side of power supply unit BAT1 to each other.

Smoothing capacitor C1 is connected between line LN1B and negative bus LN1C, and reduces the AC component contained in the DC voltage between line LN1B and negative bus LN1C.

Switching circuit SW1 is configured to be able to control a current that flows from power storage unit BAT1 to inductor L1, in response to switching instruction PWC1 from control unit 2 (Fig. 1). Namely, during the boost operation, transistor Q1A is maintained at the ON state, while transistor Q1B is turned on/off in response to switching instruction PWC 1.

While transistor Q1B is turned on, a pump current Ip flows from power storage unit BAT1 to inductor L1, successively from power storage unit BAT1 through line LN1B, inductor L1, and transistor Q1B to negative bus LN1C. Inductor L1 stores electric power as electromagnetic energy by using this pump current Ip. In succession, as transition from the ON state to the OFF state of transistor Q1B is made, pump current Ip that flows through transistor Q1B is cut off. Then, due to continuity of the current in the inductor, inductor L1 will maintain the value of the current that flowed immediately before transistor Q1B was turned off. Consequently, inductor L1 discharges the electric power (electromagnetic energy) stored by using pump current Ip to main positive bus MPL through transistor Q1A. The similar operation is repeated thereafter.

Switching circuit SW1 thus performs the voltage conversion operation of converter CONV1 by repeating storage/discharge of the electric power in/from inductor L1. Here, a boost ratio (voltage between main positive bus MPL and main negative bus MNL/voltage between line LN1B and negative bus LN1C) involved with the voltage conversion operation of converter CONV1 is determined by a duty ratio of switching instruction PWC 1.

Converter CONV1 according to the embodiment of the present invention is a bidirectional chopper circuit, and it can also buck the electric power supplied from the drive force generation unit 3 (Fig. 1) side so as to charge power storage unit BAT1. During such a bucking operation, transistor Q1A is turned on/off in response to switching instruction PWC1, while transistor Q1B is maintained at the OFF state. Namely, the bucking operation is implemented by repetition of storage/discharge of the electric power in/from inductor L1 in response to turn on/off of transistor Q1A. Here, a buck ratio (voltage between line LN1B and negative bus LN1C/voltage between main positive bus MPL and main negative bus MNL) involved with the voltage conversion operation of converter CONV 1 is again determined by a duty ratio of switching instruction PWC1.

As converter CONV2 is also configured and operates in a manner the same as converter CONV1 described above, detailed description will not be repeated.

### (Configuration of Inductor)

Inductor L1 includes a core (magnetic core) CR1 and a coil WD1 wound around core CR1. Coil WD1 is helically formed and applies magnetic field in accordance with the current that flows through inductor L1 (current-induced magnetic field) to core CR1. Core CR1 is formed of a magnetic element such as layered silicon steel sheets, and magnetized in accordance with the electric power stored in/discharged from inductor L1. Namely, core CR1 internally generates magnetic flux proportional to magnetic permeability, in accordance with the magnetic field generated by the current that flows through coil WD 1.

Inductor L2 also includes a core CR2 and a coil WD2 wound around the core, in a manner similar to inductor L1 described above.

In general, a magnetization characteristic of the core may be selected relatively freely, depending on a geometrical characteristic (a direction of layering, the number of layers, and the like) and a physical characteristic (oriented/non-oriented or the like). Magnetic hysteresis has been well known as one indicator indicating a magnetization characteristic of the core. Magnetic hysteresis is a characteristic indicating an amount of magnetization when magnetic fields in opposite directions are applied alternately to a core in a non-magnetized state along a prescribed axial direction. Here, prescribed axial directions in inductors L1 and L2 correspond to the directions of magnetic fields generated by coils WD1 and WD2 with the current that flows along with storage/discharge of electric power.

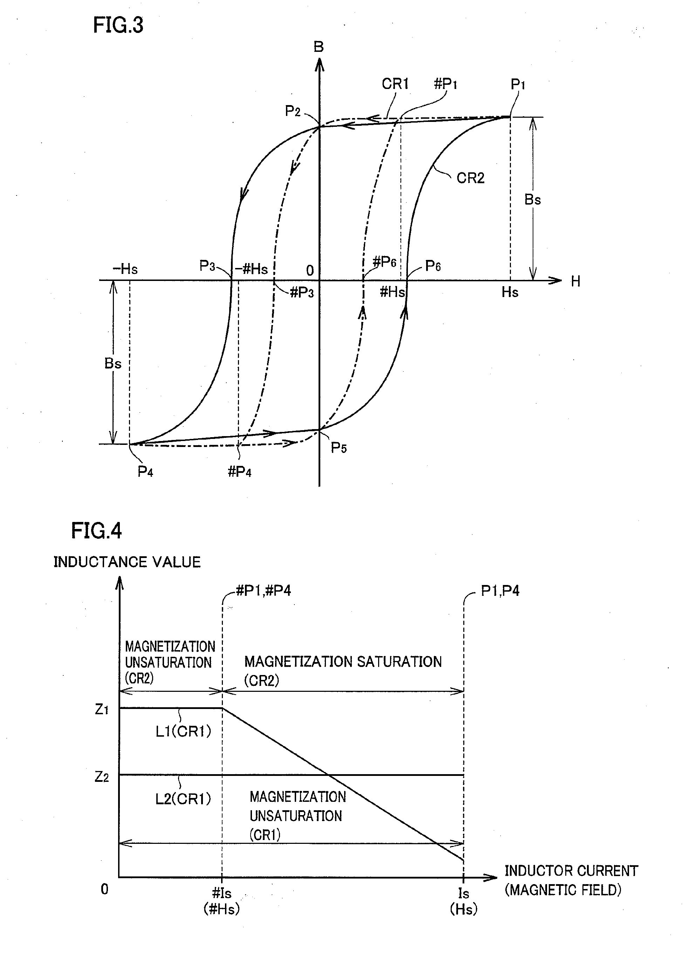

Fig. 3 shows exemplary magnetization characteristics of cores CR1 and CR2. It is noted that Fig. 3 shows the characteristics of cores CR1 and CR2 per a unit volume.

Referring to Fig. 3, the magnetization characteristic is shown in a two-dimensional graph in which the abscissa represents magnitude and orientation of applied magnetic field, while the ordinate represents amount and orientation of magnetization per a unit volume generated in cores CR1 and CR2. As shown in Fig. 3, magnetization generated in cores CR1 and CR2 is determined by the hysteresis of the applied magnetic field (magnitude and orientation). Specifically, once cores CR1 and CR2 are magnetized by application of the magnetic field, prescribed residual magnetization remains even though the applied magnetic field is set to zero. Magnetic hysteresis is caused in cores CR1 and CR2 due to such residual magnetization or the like. Curves (curve #P1-P2-#P3-#P4-P5-#P6-#P1 and curve P1-P2-P3-P4-P5-P6-P1) defining the magnetic hysteresis on the coordinates of the magnetization characteristics are thus referred to as magnetic hysteresis loops.

In addition, an area surrounded by such a magnetic hysteresis loop corresponds to hysteresis loss per one cycle of storage/discharge of electric power in/from inductor L1, L2. Hysteresis loss is a main factor of what is called core loss in the inductor. Therefore, as the area surrounded by the hysteresis loop is smaller, the hysteresis loss is smaller and the loss involved with the voltage conversion operation can be reduced.

As will be described later, in the embodiment of the present invention, core CR1 is selected such that hysteresis loss thereof per a unit volume is smaller than that of core CR2.

On the other hand, it can be assumed that cores CR1 and CR2 are constituted of the finite number of magnetic domains and an amount of magnetization is determined based on the number of magnetized domains among the finite number of magnetic domains. Accordingly, the amount of magnetization of cores CR1 and CR2 is also finite. Here, a state in which an amount of magnetization increases in accordance with applied magnetic field is referred to as magnetization unsaturation, while a state in which an amount of magnetization no longer increases despite application of greater magnetic field is referred to as magnetization saturation. Namely, points #P1 and #P4 or points P1 and P4 correspond to the boundary between magnetization unsaturation and magnetization saturation. The magnetic fields corresponding to points #P 1 and #P4 and points P1 and P4 are referred to as saturation magnetic fields #Hs and Hs, respectively.

In particular, if cores CR1 and CR2 are identical in an amount of magnetization in magnetization saturation, that is, in saturation magnetization amount Bs, core CR1 is selected such that its hysteresis loss per a unit volume is smaller than core CR2, and therefore, relation of saturation magnetic field #Hs < saturation magnetic field Hs is satisfied.

In general, in an inductor having a core, electric power is stored/discharged within a current range in which the core can maintain magnetization unsaturation, in order to avoid such an event that an inductance value gradually decreases and transient stability of a converter is lowered as the core reaches magnetization saturation. Namely, when the core is magnetically saturated due to the inductor current that flows through the inductor, the inductance value of the inductor fluctuates depending on the current value and voltage conversion capability becomes unstable.

Here, in the embodiment of the present invention, the number of turns of coils WD1 and WD2 or the like is designed such that magnetic field greater than saturation magnetic field #Hs but not greater than saturation magnetic field Hs is applied to cores CR1 and CR2 when each inductor current attains to the maximum value. Namely, core CR1 included in inductor L1 can be in any of magnetization unsaturation and magnetization saturation in a range of the inductor current, while core CR2 included in inductor L2 can maintain magnetization unsaturation in the range of the inductor current.

A DC bias characteristic of inductors L1 and L2 according to the embodiment of the present invention will be described with reference to Fig. 4. The DC bias characteristic is shown in the graph of relation of an inductance value with an inductor current (absolute value). Though a direction of flow of an actual inductor current is alternately switched in correspondence with storage/discharge of electric power in/from the inductor, with regard to the DC bias characteristic, attention is paid only to the absolute value of the inductor current.

While the inductor current does not flow, that is, while no magnetic field is applied to cores CR1 and CR2, the inductance value of inductor L1 is Z1 and the inductance value of inductor L2 is Z2 (<Z1).

Then, as magnetization unsaturation is maintained until inductor current #Is generated in core CR1 by saturation magnetic field #Hs (Fig. 3) is reached, inductor L1 maintains inductance value Z1. When the inductor current increases above #Is, inductor L1 reaches magnetization saturation and the inductance value thereof decreases. On the other hand, as magnetization unsaturation is maintained until an inductor current Is generated in core CR2 by saturation magnetic field Hs (Fig. 3) is reached, inductor L2 maintains inductance value Z2.

As shown in Fig. 4, inductor L1 achieves reduced hysteresis loss and high efficiency as compared with inductor L2, however, in a region where the inductor current is equal to or higher than #Is, the inductance value decreases and transient stability is lowered. On the other hand, though inductor L2 is greater in hysteresis loss than inductor L1, inductor L2 can maintain the inductance value for any inductor current, and therefore high transient stability can be maintained regardless of the state of the voltage conversion operation in the converter.

Therefore, converters CONV1 and CONV2 including inductors L1 and L2 respectively supply each share of electric power to drive force generation unit 3, so that transient stability can be maintained while reducing loss involved with the voltage conversion operation. In addition, with attention being paid to operation characteristics of inductors L1 and L2, control unit 2 (Fig. 1) optimizes electric power to be allotted to each of converters CONV1 and CONV2, in accordance with the electric power request from drive force generation unit 3.

It is not necessarily required that converters CONV1 and CONV2 are identical in the rating. In a converter, as an amount of required core is determined by rated electric power (or rated current) of the converter, a ratio of loss in the inductor with respect to the rated electric power is substantially constant regardless of the rated electric power. This value is dependent on hysteresis loss of the core per a unit volume. In the embodiment of the present invention, the core is specified depending on magnitude of hysteresis loss per a unit volume. Accordingly, based on comparison of loss with respect to a rated value, converter CONV1 is higher in efficiency than converter CONV2 at any rated value. In other words, though an amount of obtained effect is different depending on a ratio of rated values between converter CONV1 and converter CONV2, an effect of higher efficiency can be obtained for any rated value.

Alternatively, if rated values of the converters are different, the maximum value of the inductor current and the magnetic field generated thereby are also different. Therefore, in order to realize the range of the inductor current in which core CR1 can be in any of magnetization unsaturation and magnetization saturation and the range of the inductor current in which core CR2 can maintain magnetization unsaturation, the number of turns of coils WD1 and WD2 or the like is optimally designed depending on a rated value of the converter.

### (Allotment of Electric Power to Converter)

Allotment of electric power can be optimized under various rules, based on the characteristics of converters CONV1 and CONV2 as described above. In the embodiment of the present invention, for example, such a configuration that the steady component of the electric power request from drive force generation unit 3 is allotted to converter CONV1 and the fluctuating component of the electric power request from drive force generation unit 3 is allotted to converter CONV2 is shown. In other words, electric power in a certain amount is allotted to converter CONV of high efficiency and fluctuating electric power is allotted to converter CONV2 having high transient stability, so that high efficiency and transient stability can both be achieved.

In the present embodiment in which drive force generation unit 3 is employed as the load device, electric power request P_{L}^{*} changes over time in accordance with a running state of vehicle 100. In addition, variation also changes in accordance with a running state of vehicle 100.

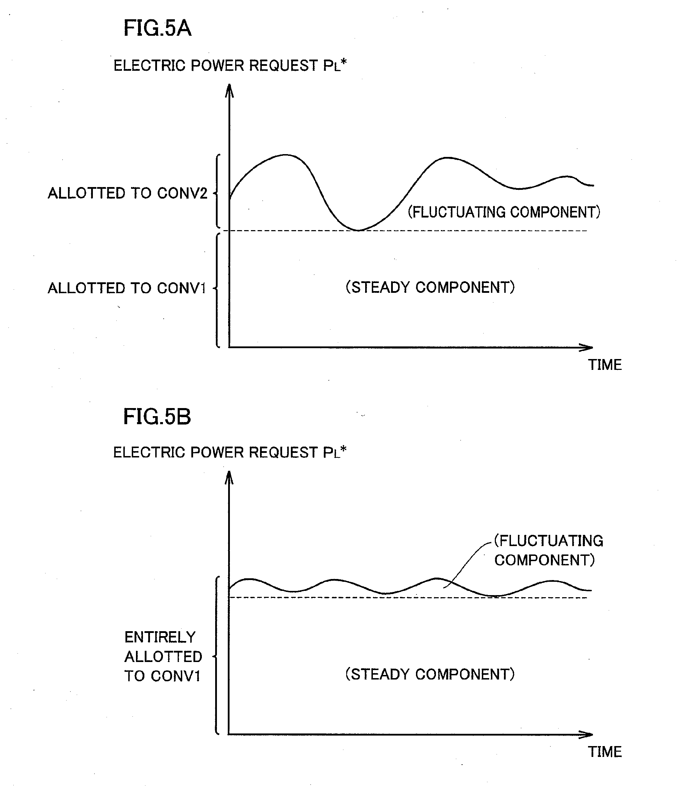

Overall allotment of electric power to each converter will be described with reference to Figs. 5A and 5B. Fig. 5A shows an example where the fluctuating component of electric power request P_{L}^{*} is relatively large, and Fig. 5B shows an example where the fluctuating component of electric power request P_{L}^{*} is relatively small.

Referring to Fig. 5A, electric power request P_{L}^{*} from drive force generation unit 3 can be divided into the fluctuating component that fluctuates over time in accordance with a running state or the like of vehicle 100 and the steady component that is constant over time.

Here, control unit 2 allots the steady component of electric power request PL^{*} to converter CONV1 and allots the fluctuating component of electric power request P_{L}^{*} to converter CONV2. Specifically, control unit 2 extracts the steady component and the fluctuating component from electric power request P_{L}^{*}. Then, control unit 2 generates switching instruction PWC1 for controlling switching circuit SW1 in converter CONV1 in accordance with the extracted steady component, while it generates switching instruction PWC2 for controlling switching circuit SW2 in converter CONV2 in accordance with the extracted fluctuating component.

Referring to Fig. 5B, when vehicle 100 runs on a flat road or the like, the fluctuating component of electric power request P_{L}^{*} is relatively small. Accordingly, when the fluctuating component in electric power request P_{L}^{*} is relatively small, entire electric power request P_{L}^{*} may be allotted to converter CONV1. Specifically, control unit 2 determines magnitude of the fluctuating component extracted from electric power request P_{L}^{*}. Then, when it is determined that the magnitude of the fluctuating component is equal to or smaller than a prescribed threshold value, control unit 2 generates switching instruction PWC1 for allotting electric power request P_{L}^{*} to converter CONV1, while it generates switching instruction PWC2 (zero signal) for stopping the voltage conversion operation of converter CONV2.

### (Control Configuration)

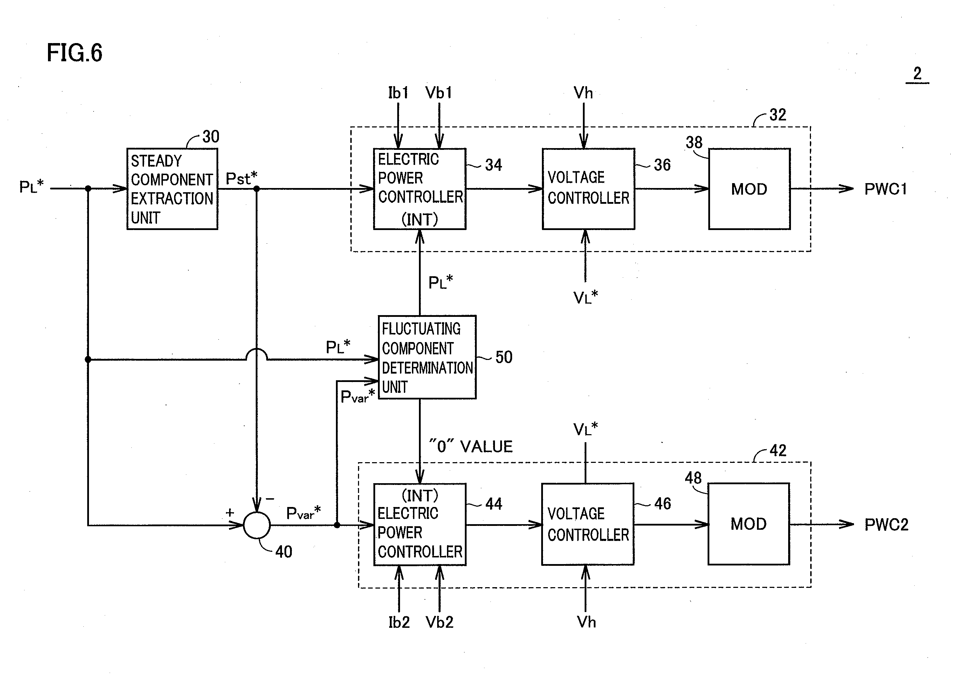

Referring to Fig. 6, the control structure of control unit 2 includes a steady component extraction unit 30, a fluctuating component extraction unit 40, a first control signal generation unit 32, a second control signal generation unit 42, and a fluctuating component determination unit 50.

Steady component extraction unit 30 extracts a steady component Pst^{*} from electric power request P_{L}^{*} coming from drive force generation unit 3 and outputs the extracted steady component to first control signal generation unit 32 and fluctuating component extraction unit 40. For example, steady component extraction unit 30 extracts a minimum value in each prescribed period of electric power request P_{L}^{*} that fluctuates over time, as steady component Pst^{*}. Alternatively, as another method, an average value of electric power requests P_{L}^{*} in each prescribed period may be extracted as steady component Pst^{*}.

Fluctuating component extraction unit 40 extracts a fluctuating component Pvar^{*} from electric power request P_{L}^{*} coming from drive force generation unit 3 and outputs the extracted fluctuating component to second control signal generation unit 42 and fluctuating component determination unit 50. For example, fluctuating component extraction unit 40 extracts fluctuating component Pvar^{*} by subtracting steady component Pst^{*} extracted by steady component extraction unit 30 from electric power request P_{L}^{*}. Alternatively, as another method, fluctuating component Pvar^{*} may be extracted by using a high-pass filter or the like for extracting only a component not lower than a prescribed frequency.

First control signal generation unit 32 generates switching instruction PWC1 for controlling switching circuit SW1 in converter CONV1 in accordance with steady component Pst^{*} extracted by steady component extraction unit 30. Specifically, first control signal generation unit 32 includes an electric power controller 34, a voltage controller 36, and a modulation unit (MOD) 32.

Electric power controller 34 calculates output electric power of converter CONV1 based on the product of output current Ib 1 and output voltage Vb 1 of power storage unit BAT1. Then, electric power controller 34 decides a control output (duty ratio) such that the calculated output electric power of converter CONV1 matches with steady component Pst^{*} received from steady component extraction unit 30, and outputs the control output to voltage controller 36. In addition, as will be described later, electric power controller 34 includes an interrupted input (INT) for receiving an output from fluctuating component determination unit 50.

Voltage controller 36 compensates for the control output (duty ratio) received from electric power controller 34 such that supply voltage Vh between main positive bus MPL and main negative bus MNL matches with voltage request V_{L}^{*} received from drive force generation unit 3, and outputs the control output to modulation unit (MOD) 38.

Modulation unit 38 compares the control output (duty ratio) received from voltage controller 36 with a carrier wave generated by a not-shown oscillation unit, and generates switching instruction PWC 1.

Second control signal generation unit 42 generates switching instruction PWC2 for controlling switching circuit SW2 in converter CONV2 in accordance with fluctuating component Pvar^{*} extracted by fluctuating component extraction unit 40. Specifically, second control signal generation unit 48 includes an electric power controller 44, a voltage controller 46, and a modulation unit (MOD) 42.

Electric power controller 44 is similar to a controller employing output current Ib2 and output voltage Vb2 of power storage unit BAT2 instead of output current Ib1 and output voltage Vb1 of power storage unit BAT1 in electric power controller 34 described above. In addition, as will be described later, electric power controller 44 includes an interrupted input (INT) for receiving an output from fluctuating component determination unit 50.

As voltage controller 46 and modulation unit 48 are similar to voltage controller 36 and modulation unit 38 respectively, detailed description thereof will not be repeated.

Fluctuating component determination unit 50 determines magnitude of fluctuating component Pvar^{*} extracted by fluctuating component extraction unit 40. Specifically, fluctuating component determination unit 50 determines whether the magnitude of fluctuating component Pvar^{*} is equal to or smaller than a prescribed threshold value. Then, when fluctuating component determination unit 50 determines that the magnitude of fluctuating component Pvar^{*} is equal to or smaller than the prescribed threshold value, fluctuating component determination unit 50 causes generation of switching instruction PWC 1 for allotting entire electric power request P_{L}^{*} to converter CONV1 and generation of switching instruction PWC2 for stopping the voltage conversion operation of converter CONV2.

Specifically, fluctuating component determination unit 50 outputs electric power request P_{L}^{*} to electric power controller 34 and outputs a "0" value (zero) to electric power controller 44. Then, when electric power controller 34 is supplied with electric power request P_{L}^{*} from fluctuating component determination unit 50 as the interrupted input, electric power controller 34 decides the control output such that the output electric power of converter CONV1 matches with electric power request P_{L}^{*}, and outputs the control output to voltage controller 36. In addition, when electric power controller 44 is supplied with the "0" value as the interrupted input, electric power controller 44 decides the control output such that the output electric power of converter CONV2 attains to the "0" value, and outputs the control output to voltage controller 46.

Fluctuating component determination unit 50 may expect fluctuation in voltage request V_{L}^{*} based on a running state or the like of vehicle 100 and stop the voltage conversion operation of converter CONV2 in accordance with the expectation.

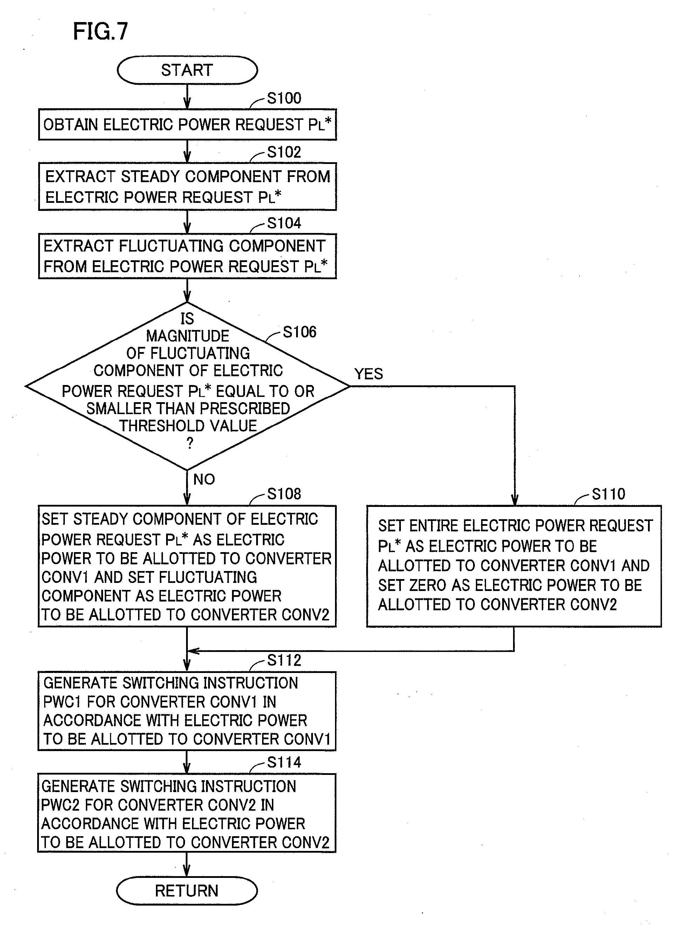

A processing procedure in control unit 2 will be described with reference to Fig. 7.

Initially, control unit 2 obtains electric power request P_{L}^{*} from drive force generation unit 3 (step S 100). Then, control unit 2 extracts the steady component from obtained electric power request P_{L}^{*} (step S102) and extracts the fluctuating component from obtained electric power request P_{L}^{*} (step S 104).

In addition, control unit 2 determines whether the magnitude of the fluctuating component of extracted electric power request P_{L}^{*} is equal to or smaller than the prescribed threshold value (step S 106).

When the magnitude of the fluctuating component of extracted electric power request P_{L}^{*} is greater than the prescribed threshold value (NO in step S 106), control unit 2 sets the steady component of electric power request P_{L}^{*} as the electric power to be allotted to converter CONV1 and sets the fluctuating component of electric power request P_{L}^{*} as the electric power to be allotted to converter CONV2 (step S 108).

When the magnitude of the fluctuating component of extracted electric power request P_{L}^{*} is equal to or smaller than the prescribed threshold value (YES in step S 106), control unit 2 sets entire electric power request P_{L}^{*} as the electric power to be allotted to converter CONV1 and sets zero as the electric power to be allotted to converter CONV2 (step S110).

Thereafter, control unit 2 generates switching instruction PWC 1 for converter CONV1 in accordance with the electric power to be allotted to converter CONV 1 set in step S 108 or step S110 described above (step S 112). At the same time, control unit 2 generates switching instruction PWC2 for converter CONV2 in accordance with the electric power to be allotted to converter CONV2 set in step S 108 or step S 110 described above (step S 114).

Thereafter, control unit 2 repeats the processing in step S 100 to step S 114 described above until electric power request P_{L}^{*} is cut off, that is, until actuation of vehicle 100 is stopped.

According to the embodiment of the present invention, core CR1 included in converter CONV1 can be in any of magnetization unsaturation and magnetization saturation within a range of an inductor current. On the other hand, core CR2 included in converter CONV2 is capable of maintaining magnetization unsaturation within a range of an inductor current. Therefore, as an inductor current that may magnetically saturate core CR1 is tolerable in converter CONV1, an inductor of high efficiency causing magnetization saturation with small current-induced magnetic field can be employed. Thus, loss involved with the voltage conversion operation of converter CONV1 can be reduced. Furthermore, as core CR2 maintains magnetization unsaturation in converter CONV2, the inductance value of inductor L2 is stable. Thus, transient stability in the voltage conversion operation of converter CONV2 can be maintained. Therefore, a power supply system attaining both high efficiency and transient stability and a vehicle including the same can be provided.

In addition, according to the embodiment of the present invention, core CR1 included in inductor L1 in converter CONV1 is lower in hysteresis loss per a unit volume than core CR2 included in inductor L2 in converter CONV2. Accordingly, converter CONV1 can achieve reduced loss involved with the voltage conversion operation. Furthermore, as core CR2 in converter CONV2 is greater in hysteresis loss per a unit volume than core CR1 in converter CONV1, magnetization saturation is less likely. Thus, transient stability in the voltage conversion operation of converter CONV2 can be maintained. Therefore, a power supply system attaining both high efficiency and transient stability and a vehicle including the same can be realized.

Moreover, according to the embodiment of the present invention, allotment of the requested electric power is decided such that the steady component of the electric power request from drive force generation unit 3 is allotted to converter CONV1 and the fluctuating component is allotted to converter CONV2. Thus, higher efficiency can be achieved by allotting the electric power of a certain amount to converter CONV1 of high efficiency, and further transient stability can be achieved by allotting the fluctuating electric power to converter CONV2 having high transient stability.

Further, according to the embodiment of the present invention, when the fluctuating component of the electric power request is small, the voltage conversion operation of converter CONV2 is stopped and the entire electric power request is allotted to converter CONV1. Thus, a rate of operation of converter CONV1 of high efficiency can be enhanced and the efficiency of the power supply system as a whole can further be improved.

### (Variation)

The present invention is applicable also to a power supply system including a greater number of power storage units and converters, so long as relation between inductor L1 and inductor L2 described above is maintained.

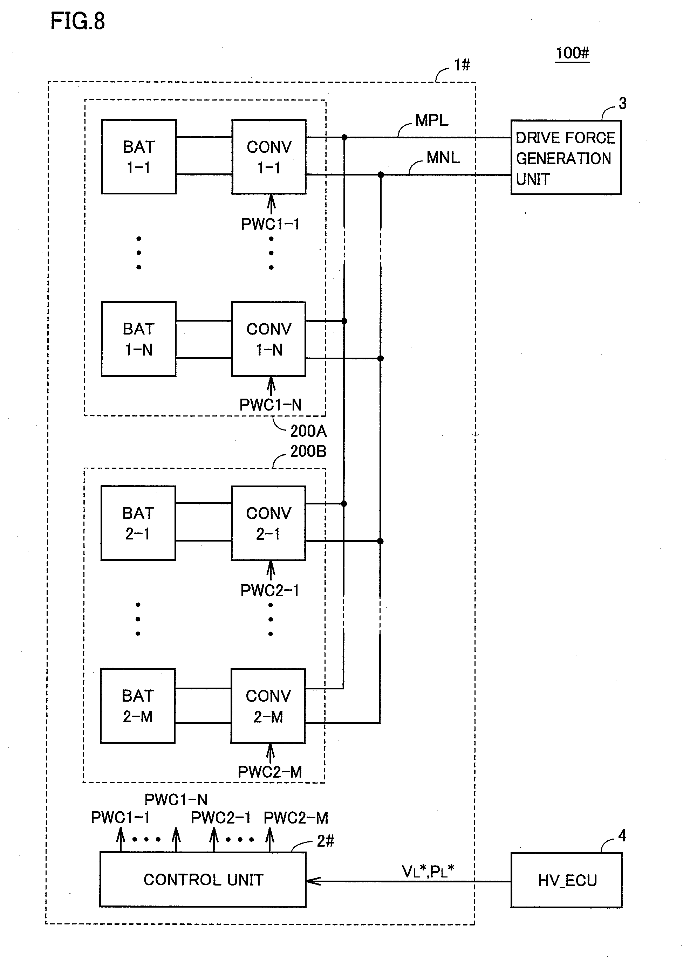

A configuration of a vehicle 100# including a power supply system 1# according to the variation of the embodiment of the present invention will be described with reference to Fig. 8. As vehicle 100# includes power supply system 1# arranged instead of power supply system 1 in vehicle 100 shown in Fig. 1 and drive force generation unit 3 and HV_ECU 4 are the same, detailed description thereof will not be repeated.

Power supply system 1# includes a first-group power supply portion 200A in which the number of sets of converters CONV1 and corresponding power storage units BAT1 is increased to N and a second-group power supply portion 200B in which the number of sets of converters CONV2 and corresponding power storage units BAT2 is increased to M, in power supply system 1 shown in Fig. 1. In addition, power supply system 1# includes an output current detection unit and an output voltage detection unit corresponding to each converter as well as smoothing capacitor C, supply current detection unit 16 and supply voltage detection unit 18 (each of which is not shown), as in power supply system 1 shown in Fig. 1.

First-group power supply portion 200A includes converters CONV1-1 to CONV1-N and corresponding power storage units BAT1-1 to BAT1-N. In addition, second-group power supply portion 200B includes converters CONV2-1 to CONV2-M and corresponding power storage units BAT2-1 to BAT2-M.

Converters CONV1-1 to CONV1-N do not necessarily have to be identical to each other in the rating or the like, and converters CONV2-1 to CONV2-M do not necessarily have to be identical to each other in the rating or the like either. On the other hand, each of converters CONV1-1 to CONV1-N and each of converters CONV2-1 to CONV2-M are selected such that relation between converter CONV1 and converter CONV2 is maintained.

Namely, each of the cores included in the inductors constituting converters CONV1-1 to CONV1-N is selected such that an area of a magnetic hysteresis loop per a unit volume is smaller than that of the cores included in the inductors constituting converters CONV2-1 to CONV2-M.

In addition, from another point of view, each of the cores included in converters CONV1-1 to CONV1-N can be in any of magnetization unsaturation and magnetization saturation within a range of the inductor current. On the other hand, each of the cores included in converters CONV2-1 to CONV2-M is capable of maintaining magnetization unsaturation within the range of the inductor current.

Though mentioned in the embodiment of the present invention above, basically, the rated value of each converter is not restricted. Accordingly, the rated values of the converters included in respective first-group power supply portion 200A and second-group power supply portion 200B do not necessarily have to be identical. Therefore, the number of turns of the coil in each inductor or the like is optimally selected such that the characteristic of core CR1 or CR2 described above is attained in accordance with the rated value of each converter.

A control unit 2# decides allotment of electric power based on the characteristics of first-group power supply portion 200A and second-group power supply portion 200B. For example, control unit 2# allots the steady component of the electric power request from drive force generation unit 3 to the converters in first-group power supply portion 200A and allots the fluctuating component of the electric power request from drive force generation unit 3 to the converters in second-group power supply portion 200B.

Namely, electric power of a certain amount is allotted to each converter in first-group power supply portion 200A of high efficiency and fluctuating electric power is allotted to each converter in second-group power supply portion 200B having high transient stability, so that high efficiency and transient stability can both be attained.

As the variation is otherwise the same as the embodiment of the present invention described above, detailed description will not be repeated.

In the variation of the embodiment of the present invention, drive force generation unit 3 corresponds to the "load device", main positive bus MPL and main negative bus MNL correspond to the "power line", converters CONV1-1 to 1-N correspond to the "first-group voltage conversion units," and CONV2-1 to 2-M correspond to the "second-group voltage conversion units." In addition, control unit 2# implements the "electric power allotment decision unit."

According to the variation of the embodiment of the present invention, even if three or more converters and power storage units are included, an effect similar to that in the embodiment of the present invention described above can be achieved. Therefore, the number of converters and power storage units can relatively freely be selected, depending on the electric power request of the load device such as the drive force generation unit. Accordingly, the power supply system capable of supplying electric power to load devices of various sizes and types and the vehicle including the same can be realized.

In the embodiment of the present invention and the variation thereof, the configuration employing the drive force generation unit including two motor-generators has been described as an example of the load device, however, the number of motor-generators is not limited. In addition, the load device is not limited to the drive force generation unit generating the drive force of the vehicle, and any of a device solely consuming electric power and a device capable of both power consumption and power generation is also applicable.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

## Claims

1. A power supply system having a plurality of power storage units each configured to be capable of charge and discharge, comprising:
a power line configured to be capable of supplying and receiving electric power between a load device and said power supply system; and
a plurality of voltage conversion units provided between respective ones of said plurality of power storage units and said power line and performing a voltage conversion operation between corresponding said power storage unit and said power line;
each of said plurality of voltage conversion units including
an inductor, and
a switching circuit configured to be able to control a current that flows from corresponding said power storage unit to said inductor, and implementing the voltage conversion operation by repeating storage/discharge of electric power in/from said inductor,
said plurality of voltage conversion units being constituted of a first-group voltage conversion unit including at least one voltage conversion unit and a second-group voltage conversion unit including at least one voltage conversion unit,
each of said inductors included in said first-group and second-group voltage conversion units including a core magnetized in accordance with storage/discharge of electric power,
each said core included in said first-group voltage conversion unit being in any of magnetization unsaturation and magnetization saturation within a range of a current that flows through the inductor,
each said core included in said second-group voltage conversion unit being capable of maintaining magnetization unsaturation within a range of a current that flows through the inductor, and
said first-group and said second-group voltage conversion units supplying each share of electric power to said load device.

2. A power supply system having a plurality of power storage units each configured to be capable of charge and discharge, comprising:
a power line configured to be capable of supplying and receiving electric power between a load device and said power supply system; and
a plurality of voltage conversion units provided between respective ones of said plurality of power storage units and said power line and performing a voltage conversion operation between corresponding said power storage unit and said power line;
each of said plurality of voltage conversion units including
an inductor, and
a switching circuit configured to be able to control a current that flows from corresponding said power storage unit to said inductor, and implementing the voltage conversion operation by repeating storage/discharge of electric power in/from said inductor,
said plurality of voltage conversion units being constituted of a first-group voltage conversion unit including at least one voltage conversion unit and a second-group voltage conversion unit including at least one voltage conversion unit,
each of said inductors included in said first-group and second-group voltage conversion units including a core magnetized in accordance with storage/discharge of electric power,
each said core included in said first-group voltage conversion unit being lower in hysteresis loss per a unit volume than said core included in said second-group voltage conversion unit, and
said first-group and said second-group voltage conversion units supplying each share of electric power to said load device.

3. The power supply system according to claim 1 or 2, further comprising an electric power allotment decision unit for allotting a steady component of an electric power request from said load device to said first-group voltage conversion unit and allotting a fluctuating component of said electric power request to said second-group voltage conversion unit.

4. The power supply system according to claim 3, wherein
said electric power allotment decision unit includes
a steady component extraction unit extracting said steady component from said electric power request,
a fluctuating component extraction unit extracting said fluctuating component from said electric power request,
a first control signal generation unit generating a control signal for controlling each said switching circuit in said first-group voltage conversion unit in accordance with said steady component extracted by said steady component extraction unit, and
a second control signal generation unit generating a control signal for controlling each said switching circuit in said second-group voltage conversion unit in accordance with said fluctuating component extracted by said fluctuating component extraction unit.

5. The power supply system according to claim 4, wherein
said electric power allotment decision unit further includes a fluctuating component determination unit determining magnitude of said fluctuating component extracted by said fluctuating component extraction unit, and
when said fluctuating component determination unit determines that the magnitude of said fluctuating component is equal to or smaller than a prescribed threshold value, said first control signal generation unit generates a control signal for allotting entire said electric power request to said first-group voltage conversion unit and said second control signal generation unit generates a control signal for stopping the voltage conversion operation in each said second-group voltage conversion unit.

6. The power supply system according to claim 1, wherein
each of said first-group and second-group voltage conversion units includes a chopper circuit configured to include said inductor.

7. A vehicle, comprising:
a power supply system having a plurality of power storage units each configured to be capable of charge and discharge; and
a drive force generation unit generating drive force by receiving electric power supplied from said power supply system;
said power supply system including
a power line configured to be capable of supplying and receiving electric power between said drive force generation unit and said power supply system, and
a plurality of voltage conversion units provided between respective ones of said plurality of power storage units and said power line and performing a voltage conversion operation between corresponding said power storage unit and said power line,
each of said plurality of voltage conversion units including
an inductor, and
a switching circuit configured to be able to control a current that flows from corresponding said power storage unit to said inductor, and implementing the voltage conversion operation by repeating storage/discharge of electric power in/from said inductor,
said plurality of voltage conversion units being constituted of a first-group voltage conversion unit including at least one voltage conversion unit and a second-group voltage conversion unit including at least one voltage conversion unit,
each of said inductors included in said first-group and second-group voltage conversion units including a core magnetized in accordance with storage/discharge of electric power,
each said core included in said first-group voltage conversion unit being in any of magnetization unsaturation and magnetization saturation within a range of a current that flows through the inductor,
each said core included in said second-group voltage conversion unit being capable of maintaining magnetization unsaturation within a range of a current that flows through the inductor, and
said first-group and said second-group voltage conversion units supplying each share of electric power to said drive force generation unit.

8. A vehicle, comprising:
a power supply system having a plurality of power storage units each configured to be capable of charge and discharge; and
a drive force generation unit generating drive force by receiving electric power supplied from said power supply system;
said power supply system including
a power line configured to be capable of supplying and receiving electric power between said drive force generation unit and said power supply system, and
a plurality of voltage conversion units provided between respective ones of said plurality of power storage units and said power line and performing a voltage conversion operation between corresponding said power storage unit and said power line,
each of said plurality of voltage conversion units including
an inductor, and
a switching circuit configured to be able to control a current that flows from corresponding said power storage unit to said inductor, and implementing the voltage conversion operation by repeating storage/discharge of electric power in/from said inductor,
said plurality of voltage conversion units being constituted of a first-group voltage conversion unit including at least one voltage conversion unit and a second-group voltage conversion unit including at least one voltage conversion unit,
each of said inductors included in said first-group and second-group voltage conversion units including a core magnetized in accordance with storage/discharge of electric power,
each said core included in said first-group voltage conversion unit being lower in hysteresis loss per a unit volume than said core included in said second-group voltage conversion unit, and
said first-group and said second-group voltage conversion units supplying each share of electric power to said drive force generation unit.

9. The vehicle according to claim 7 or 8, further comprising an electric power allotment decision unit for allotting a steady component of an electric power request from said drive force generation unit to said first-group voltage conversion unit and allotting a fluctuating component of said electric power request to said second-group voltage conversion unit.
